# EUROPEAN PATENT SPECIFICATION

(11) **EP 1 882 008 B1**
(45) Date of publication and mention of the grant of the patent: **28.04.2010**
(21) Application number: 06759728.6
(22) Date of filing: 12.05.2006
(51) Int. Cl.: C08K 3/00, C08L 23/08, E04C 2/292, C08K 3/22

(54) **FLAME RETARDANT COMPOSITIONS FOR BUILDING PANELS**
FLAMMWIDRIGE ZUSAMMENSETZUNGEN FÜR BAUPLATTEN
COMPOSITIONS IGNIFUGEANTES POUR PANNEAUX DE CONSTRUCTION

(30) Priority: 18.05.2005 US 682288 P
(43) Date of publication of application: 30.01.2008
(73) Proprietor: E.I. DU PONT DE NEMOURS AND COMPANY, Wilmington, DE 19898 (US)
(72) Inventor: ROLLAND, Loic, Pierre, F-01220 Divonne Les Bains (FR)
(74) Representative: Heinemann, Monica
(86) International application number: PCT/US2006/018523
(87) International publication number: WO 2006/124658

(56) References cited:
- EP-A- 0 673 968
- US-A- 4 851 463
- US-A- 5 218 027

## Description

The present invention relates to flame retardant compositions, to sheets made of such compositions, and to multilayer structures including such sheets which can be used in building applications.

### Background of the Invention

For panels used in building and construction applications, flame retardant materials are desirable to protect against the spread of fire. Flame retardant panels cover the external surface of buildings and usually have a "sandwich" structure, the two external layers being made of metal and the intermediate layer of a flame retardant composition as described in the next paragraph below.

Important characteristics for flame retardant compositions for building panels are high flame retardancy, good heat performance and good mechanical properties. Such compositions must have a Limited Oxygen Index (LOI) of at least 29, measured according to ASTM D2863, in order to have the required flame retardancy features. Today, typical flame retardant compositions suitable for the manufacture of building panels are based on blends of polyethylene (PE) and/or ethylene vinyl acetate (EVA) with up to about 70 wt-% of a flame retardant agent such as aluminum trihydrate (ATH). Optionally, such compositions include up to about 7 wt-% of a modified polymer such as PE and/or EVA grafted with maleic anhydride. On the other hand, there is also a general desire in building applications to be cost efficient. Flame retardant agents such as ATH are expensive so that typical flame retardant compositions which include high amounts of these compounds may become expensive.

EP 0 673 968 describes polymer-based compositions comprising 25 to 50 wt-% of a polymer mixture and 50 to 75 wt-% of aluminum hydroxide or magnesium hydroxide.

US 4,851,463 discloses compositions consisting of various polymers and copolymers, surfactants, glass fiber and 60 to 80 wt-% of aluminum trihydrate or magnesium hydroxide.

US 5,498,482 describes polymer-containing compositions containing 50 to 75 wt-% of aluminum hydroxide or magnesium hydroxide and 25 to 50 wt-% of a polymer mixture.

The problem at the root of the present invention is therefore to provide low cost flame retardant compositions for the manufacture of building panels, which compositions have an LOI of at least 29 or more measured according to ASTM D2863.

### Summary of the Invention

Now, it has been surprisingly found that the above-mentioned problems can be overcome by a flame retardant composition for the manufacture of building panels comprising:
(a) from 15 to 50 wt-% of one or more ethylene copolymers chosen among EVA, ethylene alkyl acrylate, ethylene vinyl acetate carbon monoxide (EVACO) and ethylene alkyl acrylate carbon monoxide;
(b) from 5 to 50 wt-% of a flame retardant agent as defined in claim 1; and
(c) from 40 to 65 wt-% of an inert filler as defined in claim 1;
the weight percentages being based on the total weight of the composition.

The flame retardant composition including inert filler may reduce the overall cost of the composition and, therefore, the overall manufacturing costs of the final building panels. Furthermore, the partial replacement of the flame retardant agent by inert filler does not affect, but may improve, the flame retardancy properties of the composition itself.

The invention also provides a sheet for building panels made with the above flame retardant composition.

The invention further provides a multilayer structure for building panels comprising at least one sheet as described above, which sheet is positioned between two external layers made of aluminum.

### Detailed Description of the Invention

The EVA copolymer used in the composition preferably contains from 25 to 90 wt-% of ethylene and 10 to 75 wt-% of vinyl acetate, or from 55 to 75 wt-% of ethylene and 20 to 45 wt-% of vinyl acetate, the weight % being based on the total amount of the EVA copolymer. Generally, the EVA copolymer of the composition has a melt flow index (MFI) in the range between 0.05 and 100 g/10 min, preferably less than 50 g/10 min, measured according to ASTM D-1238 (2.16 kg and 190°C).

The ethylene alkyl acrylate copolymer used in the composition according to the present invention preferably contains from 25 to 90 wt-% of ethylene and 10 to 75 wt-% of alkyl acrylate, or from 55 to 75 wt-% of ethylene and 15 to 45 wt-% of alkyl acrylate, the weight % being based on the total amount of the ethylene alkyl acrylate copolymer. The ethylene alkyl acrylate copolymer may have an MFI in the range of between 0.05 and 100 g/10 min, or 15 to 60 g/10 min, measured according to ASTM D-1238 (2.16 kg and 190°C). The ethylene alkyl acrylate copolymer is advantageously one or more of ethylene methyl acrylate, ethylene ethyl acrylate and ethylene butyl acrylate.

The EVACO copolymer used in the composition according to the present invention may contain from 30 to 90 wt-% of ethylene and 10 to 70 wt-% of vinyl acetate and from 1 to 20 wt-% of carbon monoxide, or from 55 to 65 wt-% of ethylene, from 20 to 30 wt-% of vinylacetate, and from 5 to 15 wt-% of carbon monoxide, the weight % being based on the total amount of the EVACO copolymer. Generally the EVACO copolymer of the composition has an MFI in the range between 1 and 50 g/10 min, or between 10 and 40 g/10 min, measured according to ASTM D-1238 (2.16 kg and 190°C).

The ethylene alkyl acrylate carbon monoxide copolymer used in the composition according to the present invention may contain from 30 to 90 wt-% of ethylene, 10 to 70 wt-% of alkyl acrylate and 1 to 20 wt-% of carbon monoxide, or from 55 to 65 wt-% of ethylene, 20 to 30 wt-% of alkyl acrylate and 5 to 15 wt-% of carbon monoxide, the weight % being based on the total amount of the ethylene alkyl acrylate carbon monoxide copolymer. Generally the ethylene alkyl acrylate carbon monoxide copolymer of the composition has an MFI in the range between 1 and 50 g/10 min, or between 10 and 40 g/10 min, measured according to ASTM D-1238 (2.16 kg and 190°C). The ethylene alkyl acrylate carbon monoxide copolymer can be one or more of ethylene methyl acrylate carbon monoxide (EMACO), ethylene ethyl acrylate carbon monoxide (EEACO) and ethylene butyl acrylate carbon monoxide (EBACO).

According to an embodiment of the present invention, the ethylene copolymer can be present in the composition from 20 to 30 wt-%, or about 25 wt-%, of the total weight of the composition.

According to another embodiment of the present invention, the one or more ethylene copolymers can be grafted and/or copolymerized with 0.2 to 3 wt-% of a carboxylic acid or a carboxylic acid anhydride functionality, the weight % being based on the total weight of the ethylene copolymers. Such carboxylic acid or carboxylic acid anhydride functionality improves the elongation at break of the flame retardant composition itself and also improves the adhesion of the composition to metal surfaces such as aluminum.

The flame retardant agent used in the composition according to the present invention is one or more of ATH and magnesium trihydrate. It may preferably be present in an amount from 10 to 30 wt-%, or about 20 wt-%, of the total weight of the composition.

The inert filler used in the composition is one or more of calcium carbonate, talcum, calcinated clay, mica and zinc borate. The inert filler is present in an amount from 40 to 85 wt-%, or about 55 wt-%, of the total weight of the flame retardant composition.

In addition to the components described above, the flame retardant composition can be blended with common additives such as antioxidants, UV stabilizers, lubricants (e.g. oleamide), antiblocking agents, antistatic agents, waxes, pigments, titanium dioxide and other processing aids (e.g. zinc stearate) known in the polymer compounding art. These additives may be present in the composition in amounts and in forms well known in the art.

The flame retardant composition can be prepared by mixing the ingredients described above by use of conventional masticating equipments, for example, a rubber mill, Brabender Mixer, Banbury Mixer, Buss-ko kneader, Farrel continuous mixer or twin screw continuous mixer. Mixing times and processing temperatures can be adjusted to obtain substantially homogeneous blends as well as proper reaction in case grafted polymers are included in the composition. Typically, mixing times of about one (1) to five (5) minutes and mixing temperatures of 160°C are satisfactory.

Sheets made with the flame retardant composition described above are also an object of the present invention. Such sheets may have a thickness varying between 0.01 and 15 mm or 1 and 10 mm and can be manufactured either directly by melt blend extrusion as described above, or alternatively by preparing the composition which is subsequently processed by means of any conventional technology such as extrusion, calendering and hot lamination.

A multilayer structure may comprise at least one sheet of the above flame retardant composition, which sheet is adjacent to at least one aluminum layer, and is preferably positioned between two external aluminum layers. The function of the at least one aluminum layer, or preferably the two external aluminum layers, is to confer to the sheet structure itself strength, stiffness, resistance to various weather conditions, additional flame retardancy and aesthetical appearance. The multilayer structure according to the present invention is used as outer layer on building walls whereby the at least one aluminum layer is visible.

The one or more aluminum layers may have a thickness varying from 200 µm to 2 mm, 300 µm to 1 mm, or about 500 µm.

The multilayer structure described above can be manufactured by conventional methods. These methods include extrusion coating the flame retardant composition onto aluminum sheets and extrusion laminating the flame retardant composition between aluminum sheets. If necessary, a layer of a conventional adhesive is applied onto the aluminum sheet prior to the extrusion or lamination process.

The invention will be further described in the following Examples.

### Examples

### General Procedure

Blends were prepared by melt-compounding the components in the amounts given in the following examples. The melt compounding was carried out on a two roll mill with batches from 100 grams at 150-170°C for about five minutes. The milled product was formed into a testing plaque in a hydraulic press at 150-170°C for about five minutes. Afterward the Limited Oxygen Index (LOI, ASTM D2863), the tensile strength (ASTM D638) and the elongation at break (ASTM D638) were tested. The results are shown in Table 1.

### Example 1

- 20 g of ethylene methyl acrylate from E. I. du Pont de Nemours and Company (DuPont) as Elvaloy^{®} AC 1609.
- 20 g of ATH from Alcan Chemicals Europe under the tradename Baco SF7.
- 60 grams of calcium carbonate from Alpha Calcit Füllstoff GmbH & Co. KG under the tradename Calcicoll W 15.

### Example 2

- 25 g of ethylene methyl acrylate as in Example 1.
- 20 g of ATH as in Example 1.
- 55 g of calcium carbonate as in Example 1.

### Example 3

- 20 g of ethylene methyl acrylate from DuPont as Elvaloy^{®} AC 12024.
- 20 g of ATH as in Example 1.
- 60 grams of calcium carbonate as in Example 1.

### Example 4

- 2 g of ethylene methyl acrylate grafted with maleic anhydride (MAH) from DuPont as Fusabond^{®} 556D.
- 18 g of ethylene methyl acrylate as in Example 3.
- 20 g of ATH as in Example 1.
- 60 g of calcium carbonate as in Example 1.

### Example 5

- 20 g of ethylene methyl acrylate from DuPont under the tradename Elvaloy^{®} AC 1820.
- 20 g of ATH as in Example 1.
- 60 g of calcium carbonate as in Example 1.

### Example 6 (comparative)

- 31.5 g of polyethylene having a density of about 0.920 g/cm³ measured according to ASTM 7920.
- 68.5 g of ATH as in Example 1.

### Example 7 (comparative)

- 30 g of ethylene methyl acrylate from DuPont as Elvaloy^{®} AC 1820.
- 70 g of calcium carbonate as in Example 1.

### Example 8 (comparative)

- 20 g of ethylene methyl acrylate as in Example 7.
- 80 g as in Example 1.

**Table 1**

| Ex No. | 1 | 2 | 3 | 4 | 5 | 6 | 7 | 8 |
|---|---|---|---|---|---|---|---|---|
| LOI (%) | 36 | 32 | n.m⁽³⁾ | 33 | 33 | 29 | 22 | 27 |
| TS⁽¹⁾ (MPa) | 9.9 | 10 | 5.6 | 6.9 | n.m⁽³⁾ | 4.6 | n.m⁽³⁾ | n.m⁽³⁾ |
| ES⁽²⁾ (%) | 12 | 15 | 17 | 21 | n.m⁽³⁾ | 21 | n.m⁽³⁾ | n.m⁽³⁾ |

| | | | | | | | | |
|---|---|---|---|---|---|---|---|---|
| (1) Tensile Strength (2) Elongation at Break (3) not measured | | | | | | | | |

Table 1 shows that compositions of the invention (Examples 1 to 5) had higher LOI values than compositions of comparative Examples 6 to 8. Therefore, the compositions of the invention are not only less expensive but also perform better than conventional ones, such as blends of polyethylene and ATH (Example 6). The mechanical properties Examples 1-5 were almost better than those of conventional compositions whereby it could be noted that the presence of grafted ethylene copolymers increased the elongation at break of the composition (Example 4).

## Claims

1. A flame retardant composition for the manufacture of building panels comprising:
(a) from 15 to 50 wt-% of one or more ethylene copolymers including ethylene vinyl acetate copolymer, ethylene alkyl acrylate copolymer, ethylene vinyl acetate carbon monoxide copolymer, ethylene alkyl acrylate carbon monoxide copolymer, or combinations of two or more thereof;
(b) from 5 to 50 wt-% of a flame retardant agent wherein the flame retardant agent is one or more aluminum trihydrate, magnesium trihydrate, or combinations thereof; and
(c) from 40 to 65 wt-% of an inert filler wherein the filler is one or more calcium carbonate, talcum, calcinated clay, mica and zinc borate, or combinations of two or more thereof;
the weight % being based on the total weight of the composition.

2. The composition according to claim 1 wherein the ethylene alkyl acrylate copolymer is one or more ethylene methyl acrylate copolymer, ethylene ethyl acrylate copolymer, ethylene butyl acrylate copolymer, or combinations of two or more thereof.

3. The composition of claim 1 or 2 wherein the ethylene alkyl acrylate carbon monoxide copolymer is one or more ethylene methyl acrylate carbon monoxide copolymer, ethylene ethyl acrylate carbon monoxide copolymer, ethylene butyl acrylate carbon monoxide copolymer, or combinations of two or more thereof.

4. The composition of any preceding claim wherein the ethylene copolymer is present in the composition in an amount from 20 to 30 wt-% of the total weight of the composition.

5. The composition of any preceding claim wherein the flame retardant agent is present in the composition in an amount from 10 to 30 wt-% of the total weight of the composition.

6. The composition of any preceding claim wherein the ethylene copolymer is grafted and/or copolymerized with 0.2 to 3 wt-% of a carboxylic acid or carboxylic acid anhydride, based on the total weight of the ethylene copolymer.

7. A sheet for building panels comprising or made with a composition as **characterized in** any one of claims 1 to 6 wherein the sheet optionally has a thickness between 1 and 10 mm and is optionally positioned between two aluminum layers.

## Patentansprüche

1. Flammhemmende Zusammensetzung für die Herstellung von Bauplatten, die aufweist:
(a) 15 bis 50 Gew.-% eines oder mehrerer Ethylen-Copolymere, zu denen Ethylen-Vinylacetat-Copolymer, Ethylen-Alkylacrylat-Copolymer, Ethylen-Vinylacetat-Kohlenmonoxid-Copolymer, Ethylen-Alkylacrylat-Kohlenmonoxid-Copolymer oder Kombinationen von zwei oder mehreren der Copolymere gehören;
(b) 5 bis 50 Gew.-% eines Flammverzögerungsmittels, wobei das Flammverzögerungsmittel aus einer oder mehreren der Verbindungen Aluminiumtrihydrat, Magnesiumtrihydrat oder Kombinationen davon besteht; und
(c) 40 bis 65 Gew.-% eines inerten Füllstoffs, wobei der Füllstoff aus einer oder mehreren der Verbindungen Calciumcarbonat, Talkum, gebranntem Ton, Glimmer und Zinkborat oder Kombinationen von zwei oder mehreren dieser Verbindungen besteht;
wobei der Anteil in Gew.-% auf das Gesamtgewicht der Zusammensetzung bezogen ist.

2. Zusammensetzung nach Anspruch 1, wobei das Ethylen-Alkylacrylat-Copolymer aus einer oder mehreren der Verbindungen Ethylen-Methylacrylat-Copolymer, Ethylen-Ethylacrylat-Copolymer, Ethylen-Butylacrylat-Copolymer oder Kombinationen von zwei oder mehreren dieser Verbindungen besteht.

3. Zusammensetzung nach Anspruch 1 oder 2, wobei das Ethylen-Alkylacrylat-Kohlenmonoxid-Copolymer aus einer oder mehreren der Verbindungen Ethylen-Methylacrylat-Kohlenmonoxid-Copolymer, Ethylen-Ethylacrylat-Kohlenmonoxid-Copolymer, Ethylen-Butylacrylat-Kohlenmonoxid-Copolymer oder Kombinationen von zwei oder mehreren dieser Verbindungen besteht.

4. Zusammensetzung nach einem der vorstehenden Ansprüche, wobei das EthylenCopolymer in der Zusammensetzung in einem Anteil von 20 bis 30 Gew.-% des Gesamtgewichts der Zusammensetzung anwesend ist.

5. Zusammensetzung nach einem der vorstehenden Ansprüche, wobei das Flammverzögerungsmittel in der Zusammensetzung in einem Anteil von 10 bis 30 Gew.-% des Gesamtgewichts der Zusammensetzung anwesend ist.

6. Zusammensetzung nach einem der vorstehenden Ansprüche, wobei das EthylenCopolymer mit 0,2 bis 3 Gew.-% einer Carbonsäure oder eines Carbonsäureanhydrids, bezogen auf das Gesamtgewicht des Ethylen-Copolymers, gepfropft und/oder copolymerisiert wird.

7. Tafel für Bauplatten, die eine Zusammensetzung nach einem der Ansprüche 1 bis 6 aufweist oder damit hergestellt ist, wobei die Tafel wahlweise eine Dicke zwischen 1 und 10 mm aufweist und wahlweise zwischen zwei Aluminiumlagen angeordnet ist.

## Revendications

1. Composition ignifugeante pour la fabrication de panneaux de construction comprenant:
(a) de 15 à 50% en poids d'un ou de plusieurs copolymères d'éthylène incluant un copolymère d'éthylène-acétate de vinyle, un copolymère d'éthylène-acrylate d'alkyle, un copolymère d'éthylène-acétate de vinyle-monoxyde de carbone, un copolymère d'éthylène-acrylate d'alkyle-monoxyde de carbone ou des combinaisons de deux ou plus de ceux-ci;
(b) de 5 à 50% en poids d'un agent ignifugeant, dans laquelle l'agent ignifugeant est un ou plusieurs parmi un trihydrate d'aluminium, un trihydrate de magnésium ou des combinaisons de ceux-ci; et
(c) de 40 à 65% en poids d'une charge inerte, dans laquelle la charge est un ou plusieurs parmi un carbonate de calcium, un talc, une argile calcinée, un mica et un borate de zinc ou des combinaisons de deux ou plus de ceux-ci;
les % en poids étant basés sur le poids total de la composition.

2. Composition selon la revendication 1, dans laquelle le copolymère d'éthylène-acrylate d'alkyle est un ou plusieurs parmi un copolymère d'éthylène-acrylate de méthyle, un copolymère d'éthylène-acrylate d'éthyle, un copolymère d'éthylène-acrylate de butyle ou des combinaisons de deux ou plus de ceux-ci.

3. Composition selon la revendication 1 ou 2, dans laquelle le copolymère d'éthylène-acrylate d'alkyle-monoxyde de carbone est un ou plusieurs parmi un copolymère d'éthylène-acrylate de méthyle-monoxyde de carbone, un copolymère d'éthylène-acrylate d'éthyle-monoxyde de carbone, un copolymère d'éthylène-acrylate de butyle-monoxyde de carbone ou des combinaisons de deux ou plus de ceux-ci.

4. Composition selon l'une quelconque des revendications précédentes, dans laquelle le copolymère d'éthylène est présent dans la composition dans une quantité de 20 à 30% en poids du poids total de la composition.

5. Composition selon l'une quelconque des revendications précédentes, dans laquelle l'agent ignifugeant est présent dans la composition dans une quantité de 10 à 30% en poids du poids total de la composition.

6. Composition selon l'une quelconque des revendications précédentes, dans laquelle le copolymère d'éthylène est greffé et/ou copolymérisé avec de 0,2 à 3% en poids d'un acide carboxylique ou d'un anhydride d'acide carboxylique, sur la base du poids total du copolymère d'éthylène.

7. Feuille pour des panneaux de construction comprenant ou fabriqué avec une composition telle que **caractérisée** dans l'une quelconque des revendications 1 à 6, où la feuille possède optionnellement une épaisseur entre 1 et 10 mm et elle est optionnellement positionnée entre deux couches d'aluminium.
